# EUROPEAN PATENT APPLICATION

(11) **EP 4 501 675 A1**
(43) Date of publication of application: **05.02.2025**
(21) Application number: 23780002.4
(22) Date of filing: 23.03.2023
(51) Int. Cl.: B60K 1/00, B62D 21/02

(54) **BOTTOM STRUCTURE OF VEHICLE**

(30) Priority: 29.03.2022 JP 2022053159
(71) Applicant: Mitsubishi Jidosha Kogyo Kabushiki Kaisha, Tokyo 108-8410 (JP)
(72) Inventor: OHE, Tomoyuki, Tokyo 108-8410 (JP); FUJII, Takashi, Tokyo 108-8410 (JP); MIZUGUCHI, Yasuo, Tokyo 108-8410 (JP)
(74) Representative: Regimbeau
(86) International application number: PCT/JP2023/011376
(87) International publication number: WO 2023/189991

(57) **Abstract**

A bottom structure of a vehicle includes: a frame above which a cabin is provided; a power plant located below the frame and including a high-voltage component; a mount located behind the high-voltage component and supporting the power plant on the frame; and a spare tire located below the frame and supported on the frame behind the mount. when viewed from a front-rear direction of the vehicle, the high-voltage component and the mount overlap with each other, and the spare tire and the mount overlap with each other.

## Description

### TECHNICAL FIELD

The present invention relates to a bottom structure of a vehicle.

### BACKGROUND ART

In general, in a hybrid vehicle or an electric vehicle, a power plant including a motor and a high-voltage component is provided at the lower portion of the vehicle body.

In such a hybrid vehicle, the bottom structure of a vehicle is known in which a spare tire is attached to the vehicle body in a space at the rear of the vehicle with respect to the power plant (see Patent Literatures 1 and 2).

### CITATION LIST

### PATENT LITERATURE

Patent Literature 1: JP2001-138753A
Patent Literature 2: JP2012-140055A

### SUMMARY OF INVENTION

### TECHNICAL PROBLEM

In the related art described above, at the time of a rear-end collision, the load applied from the rear may cause the spare tire to move toward the front of the vehicle and interfere with the high-voltage component of the power plant.

Therefore, several improvements have been required in order to protect the high-voltage component at the time of a rear-end collision.

The present invention has been made in view of the above circumstances, and the object of the present invention is to provide a bottom structure of a vehicle advantageous in protecting a high-voltage component at the time of a rear-end collision.

### SOLUTION TO PROBLEM

In order to achieve the above object, an embodiment of the present invention provides a bottom structure of a vehicle, the bottom structure including: a frame above which a cabin is provided; a power plant located below the frame and including a high-voltage component; a mount located behind the high-voltage component and supporting the power plant on the frame; and a spare tire located below the frame and supported on the frame behind the mount. When viewed from a front-rear direction of the vehicle, the high-voltage component and the mount overlap with each other, and the spare tire and the mount overlap with each other.

### ADVANTAGEOUS EFFECTS OF INVENTION

According to the embodiment of the present invention, when the spare tire moves toward the front of the vehicle due to the load input from the other vehicle at the time of a rear-end collision, the spare tire abuts against the mount, so that the spare tire is prevented from moving toward the front of the vehicle. Therefore, the spare tire can be prevented from interfering with the high-voltage component, which is advantageous in terms of protecting the high-voltage component.

### BRIEF DESCRIPTION OF DRAWINGS

[FIG. 1] FIG. 1 is a plan view of a bottom structure of a vehicle according to an embodiment;
[FIG. 2] FIG. 2 is a perspective view of the bottom structure of a vehicle according to the embodiment as viewed from above;
[FIG. 3] FIG. 3 is a side view of the bottom structure of a vehicle according to the embodiment as viewed from the vehicle width direction;
[FIG. 4] FIG. 4 is a perspective view of a protector provided with a reinforcing member as viewed from the front of the vehicle; and
[FIG. 5] FIG. 5 is a perspective view of a protector provided with a reinforcing member according to a modification as viewed from the front of the vehicle.

### DESCRIPTION OF EMBODIMENTS

Hereinafter, a bottom structure of a vehicle according to an embodiment of the present invention will be described with reference to the drawings.

In the drawings, a reference sign FR denotes the front of the vehicle, a reference sign UP denotes the upper side of the vehicle, a reference sign IN denotes the inner side in the vehicle width direction, and OUT denotes the outer side in the vehicle width direction.

The vehicle such as an electric vehicle (EV), a hybrid vehicle (HV), and a plug-in hybrid vehicle (PHEV) includes a motor as a drive source. In the present embodiment, the vehicle is a plug-in hybrid vehicle (PHEV) that can be externally charged or externally supply power.

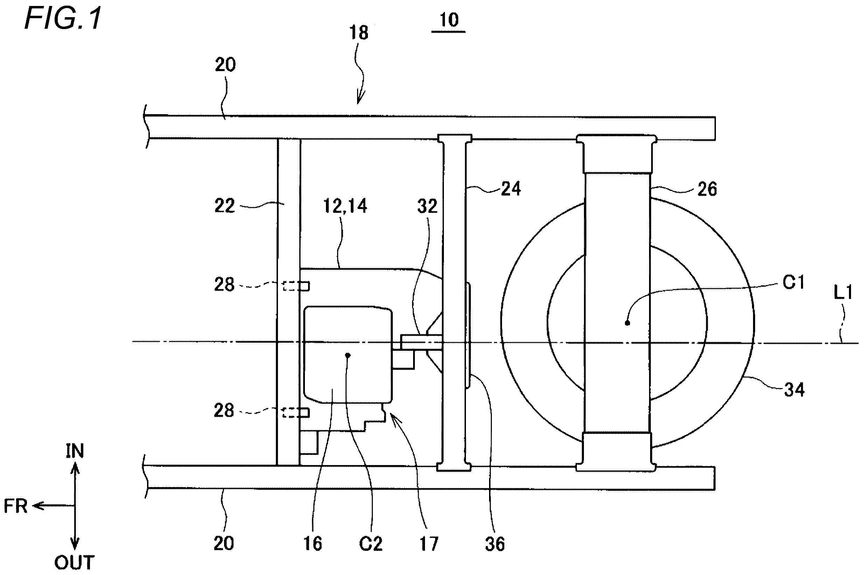

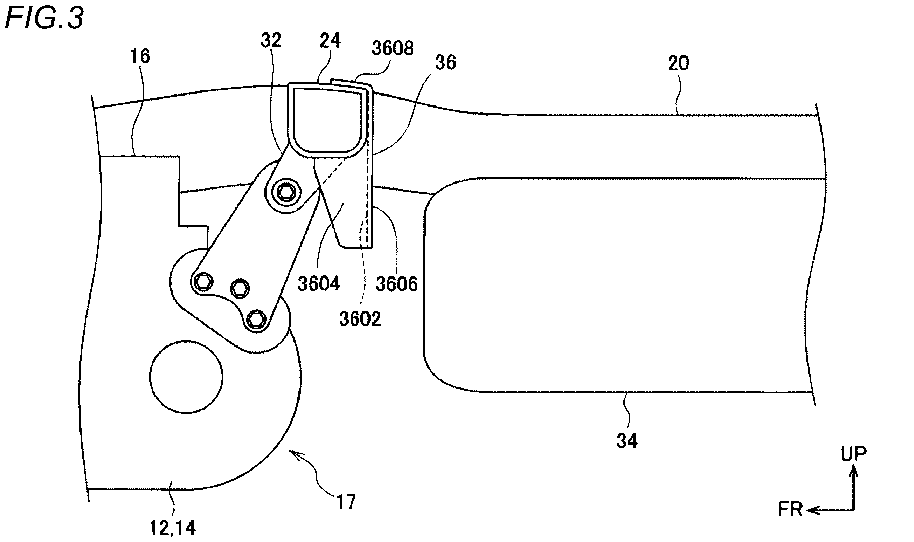

As shown in FIGS. 1 and 3, a vehicle 10 includes a power plant 17. The power plant 17 includes a motor 12, a speed reduction mechanism 14 constituting a part of a power transmission mechanism that transmits a rotational driving force from the motor 12 to a driving wheel (a rear wheel) (not shown), and a high-voltage component 16 such as a transformer that transforms the voltage supplied from a battery.

In the present embodiment, the vehicle 10 is a pickup truck, and is a frame vehicle in which a cabin and a cargo box (not shown) are mounted on a ladder frame 18 (a frame).

As shown in FIG. 1, the ladder frame 18 includes a pair of side frames 20 that are spaced apart in the vehicle width direction and that extend in the vehicle front-rear direction, and a plurality of cross members that extend in the vehicle width direction so as to connect the pair of side frames 20.

The plurality of cross members include a first cross member 22 that is provided at the intermediate portion of the side frame 20 in the vehicle front-rear direction, a second cross member 24 that is provided at the rear of the vehicle with respect to the first cross member 22, and a third cross member 26 that is provided at the rear of the vehicle with respect to the second cross member 24 and that is located at the rearmost of the vehicle among the plurality of cross members.

The rear ends of the pair of side frames 20 are connected by a rear bumper reinforcement (not shown) that extends in the vehicle width direction.

As shown in FIG. 1, in the plan view, the power plant 17 is located between the first cross member 22 and the second cross member 24.

The motor 12 and the speed reduction mechanism 14 are integrally assembled, and the high-voltage component 16 is attached to the upper portion of the motor 12 and the speed reduction mechanism 14.

As shown in FIGS. 1 and 3, the front portion of the power plant 17 is supported on the first cross member 22 via a pair of front mounts 28 that are spaced apart in the vehicle width direction, and the rear portion of the power plant 17 is supported on the second cross member 24 via a rear mount 32.

The rear mount 32 is made of metal and, as shown in FIG. 3, protrudes diagonally upward at the rear of the vehicle from the rear portion of the power plant 17, specifically, from a location rearward of the high-voltage component 16, and is connected to the second cross member 24.

A spare tire 34 is detachably attached to the lower surface of the third cross member 26. The spare tire 34 is located at the rear of the vehicle with respect to the high-voltage component 16 and the rear mount 32.

As shown in FIGS. 1 and 3, when viewed in the front-rear direction of the vehicle 10, the high-voltage component 16 and the rear mount 32 overlap each other, and the spare tire 34 and the rear mount 32 overlap each other.

As shown in FIG. 1, in the plan view, a center C1 of the spare tire 34 is deviated from a virtual line L1 that passes through the rear mount 32 and that extends in the front-rear direction of the vehicle 10 to one side (the right side in the present embodiment) in the vehicle width direction.

A center C2 of the high-voltage component 16 in the vehicle width direction is deviated from the virtual line L1 to the other side (the left side in the present embodiment) in the vehicle width direction.

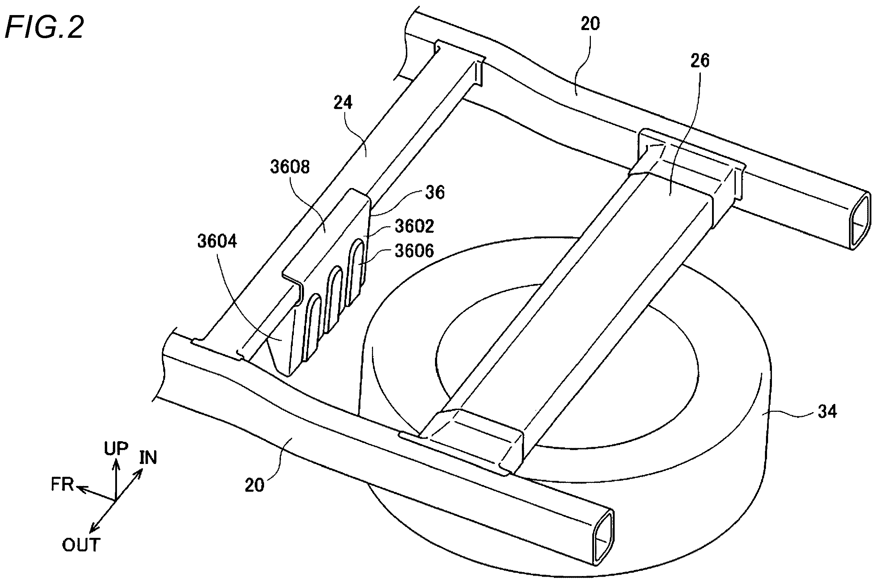

As shown in FIGS. 1 to 3, the second cross member 24 is provided with a protector 36 that can abut against the spare tire 34. The protector 36 is located between the rear mount 32 and the spare tire 34.

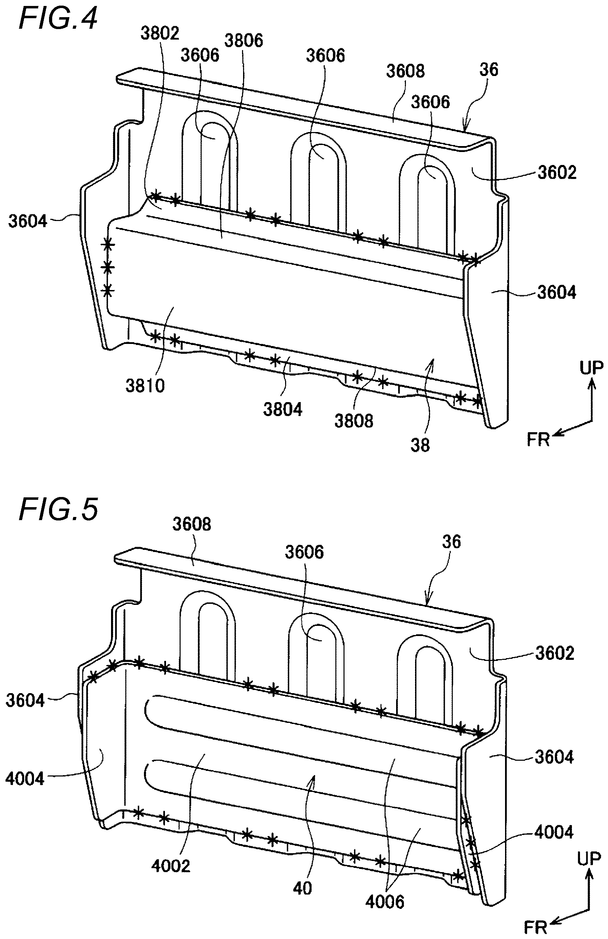

As shown in FIG. 4, the protector 36 is made of metal, and includes a vertical wall 3602 that extends in the vehicle width direction and a pair of side walls 3604 that protrude from both end portions of the vertical wall 3602 in the vehicle width direction toward the front of the vehicle.

In the vertical wall 3602, a plurality of beads 3606 that protrude toward the rear of the vehicle and that extend in the upper-lower direction are provided at intervals in the vehicle width direction.

The upper portion of the vertical wall 3602 abuts against the rear surface of the second cross member 24, and a flange 3608 that is bent toward the front of the vehicle from the upper end of the vertical wall 3602 is joined to the upper surface of the second cross member 24 by welding. In FIG. 4 and FIG. 5 to be described later, a symbol "*" indicates a welded portion that is continuously welded by arc welding.

As shown in FIGS. 3 and 4, the pair of side walls 3604 are formed with a width in the vehicle front-rear direction that is larger at the upper portion than at the lower portion.

The upper ends of the pair of side walls 3604 are joined by welding from the lower portion of the rear surface of the second cross member 24 to the lower surface.

The protector 36 is formed such that one side in the vehicle width direction is more likely to be deformed as compared with the other side in the vehicle width direction.

As a configuration in which one side of the protector 36 in the vehicle width direction is more likely to be deformed as compared with the other side in the vehicle width direction, various known structures in the related art can be used, such as adjusting the thickness or forming a cutout.

In the present embodiment, the plate thickness of the side wall 3604 on one side in the vehicle width direction is made thinner than the plate thickness of the side wall 3604 on the other side in the vehicle width direction.

In the present embodiment, the protector 36 includes a reinforcing member 38 attached to the protector 36.

The reinforcing member 38 is made of metal and is, for example, a bulkhead having a U-shaped cross section as shown in FIG. 4.

The reinforcing member 38 includes an upper surface portion 3806 and a lower surface portion 3808 that protrude from the vertical wall 3602 toward the front of the vehicle, and a top surface portion 3810 that connects the vehicle front ends of the upper surface portion 3806 and the lower surface portion 3808.

The reinforcing member 38 is joined to the front surface of the vertical wall 3602 by welding by an upper flange portion 3802 provided on the upper surface portion 3806 and a lower flange portion 3804 provided on the lower surface portion 3808. Both ends of the top surface portion 3810 in the vehicle width direction are joined to the inner surfaces of the pair of side walls 3604 by welding.

The top surface portion 3810 is located at a location facing the rear mount 32 in the vehicle front-rear direction.

As the configuration in which the one side of the protector 36 in the vehicle width direction is more likely to be deformed as compared with the other side in the vehicle width direction, various known structures in the related art can be used, such as a configuration in which the number of welded portions to the protector 36 is reduced on one side of the reinforcing member 38 in the vehicle width direction compared to the other side, and a configuration in which the dimension of the reinforcing member 38 in the upper-lower direction is made smaller on the one side of the reinforcing member 38 in the vehicle width direction compared to the other side.

In the present embodiment, by making the welded portion of the top surface portion 3810 to the side wall 3604 on one side in the vehicle width direction shorter in length than the welded portion to the side wall 3604 on the other side, or by not welding the top surface portion 3810 to the side wall 3604 on the one side in the vehicle width direction, the one side of the protector 36 in the vehicle width direction is made more likely to be deformed than the other side in the vehicle width direction.

Next, a modification of a reinforcing member 40 will be described with reference to FIG. 5.

In the following description, the same portions and members as those in the above embodiment are denoted by the same reference signs, the description thereof will be simplified or omitted, and the description will focus on the difference from the above embodiment.

The reinforcing member 40 includes a bottom surface portion 4002 that extends along the front surface of the vertical wall 3602, and a pair of side surface portions 4004 that protrude from both ends of the bottom surface portion 4002 in the vehicle width direction toward the front of the vehicle and that extend along the side wall 3604. The upper end and the lower end of the bottom surface portion 4002 are joined to the vertical wall 3602 by welding, and the side surface portion 4004 is joined to the side wall 3604 by welding.

In the bottom surface portion 4002, a plurality of beads 4006 that protrude toward the front of the vehicle and that extend in the vehicle width direction are provided at intervals in the upper-lower direction, and the bottom surface portion 4002 is reinforced.

Next, the operation and effect of the present embodiment will be described.

According to the present embodiment, the spare tire 34 is supported on the vehicle body at the rear of the high-voltage component 16 in the vehicle front-rear direction, and when viewed in the front-rear direction of the vehicle 10, the high-voltage component 16 and the rear mount 32 overlap each other and the spare tire 34 and the rear mount 32 overlap each other.

Therefore, when the spare tire 34 moves toward the front of the vehicle due to the load input from the other vehicle 10 at the time of a rear-end collision, the spare tire 34 abuts against the rear mount 32, so that the spare tire 34 is prevented from moving toward the front of the vehicle. Therefore, the spare tire 34 can be prevented from interfering with the high-voltage component 16, which is advantageous in terms of protecting the high-voltage component 16.

In the present embodiment, the center C1 of the spare tire 34 is deviated from the virtual line L1 that passes through the rear mount 32 and that extends in the front-rear direction of the vehicle 10 to one side in the vehicle width direction.

Therefore, the spare tire 34 moves toward the front of the vehicle at the time of a rear-end collision, abuts against the rear mount 32, and is guided to the one side in the vehicle width direction. Therefore, a large load can be prevented from being continuously input from the spare tire 34 to the rear mount 32, which is more advantageous in terms of protecting the high-voltage component 16.

In the present embodiment, the center C2 of the high-voltage component 16 in the vehicle width direction is deviated from the virtual line L1 to the other side in the vehicle width direction.

Therefore, the spare tire 34 abuts against the rear mount 32 and is guided to the one side in the vehicle width direction, which is a direction away from the high-voltage component 16. Therefore, this is more advantageous in terms of preventing the spare tire 34 from interfering with the high-voltage component 16, and is more advantageous in terms of protecting the high-voltage component 16.

In the present embodiment, the protector 36 that can abut against the spare tire 34 is provided at a portion of the frame between the rear mount 32 and the spare tire 34. Therefore, the load input from the spare tire 34 at the time of a rear-end collision can also be received by the protector 36.

Therefore, this is more advantageous in terms of preventing the spare tire 34 from interfering with the high-voltage component 16, and is more advantageous in terms of protecting the high-voltage component 16.

In the present embodiment, the protector 36 is provided with the reinforcing members 38 and 40, which is advantageous in terms of reinforcing the protector 36.

Therefore, it is more advantageous for the protector 36 to receive the load input from the spare tire 34 at the time of a rear-end collision. As a result, it is more advantageous in terms of preventing the spare tire 34 from interfering with the high-voltage component 16, and it is more advantageous in terms of protecting the high-voltage component 16.

In the present embodiment, the protector 36 is formed such that one side in the vehicle width direction is more likely to be deformed than the other side in the vehicle width direction.

Therefore, when the spare tire 34 abuts against the protector 36, the one side of the protector 36 in the vehicle width direction is more likely to be deformed than the other side in the vehicle width direction.

Therefore, the spare tire 34 is guided to the one side in the vehicle width direction and thereby being more advantageous in terms of preventing the spare tire 34 from interfering with the high-voltage component 16, and more advantageous in terms of protecting the high-voltage component 16.

In the present embodiment, the protector 36 includes the vertical wall 3602 that extends in the vehicle width direction and the pair of side walls 3604 that protrude from both sides of the vertical wall 3602 in the extending direction toward the front of the vehicle, and the reinforcing members 38 and 40 extend in the vehicle width direction and have both ends connected to the pair of side walls 3604.

Therefore, deformation of the pair of side walls 3604 so as to move away from each other or so as to approach each other can be prevented, and the protector 36 is less likely to be deformed easily.

Therefore, it is more advantageous for the protector 36 to receive the load input from the spare tire 34. As a result, it is more advantageous in terms of preventing the spare tire 34 from interfering with the high-voltage component 16, and it is more advantageous in terms of protecting the high-voltage component 16.

In the present embodiment, the reinforcing member 38 is a bulkhead that has a U-shaped cross section and that includes the top surface portion 3810, and the top surface portion 3810 faces the rear mount 32 in the vehicle front-rear direction.

Therefore, when the protector 36 is deformed toward the front of the vehicle, the top surface portion 3810 abuts against the rear mount 32, so that further deformation of the protector 36 is prevented. As a result, it is more advantageous for the rear mount 32 to receive the load input from the spare tire 34, it is more advantageous in terms of preventing the spare tire 34 from interfering with the high-voltage component 16, and it is more advantageous in terms of protecting the high-voltage component 16.

In the present embodiment, the case has been described in which the vertical wall 3602 of the protector 36 directly faces the spare tire 34. Alternatively, the vertical wall 3602 of the protector 36 may incline toward the front of the vehicle as the vertical wall 3602 approaches one side in the vehicle width direction.

In this way, when the spare tire 34 that moves toward the front of the vehicle at the time of a rear-end collision abuts against the vertical wall 3602 of the protector 36, the spare tire 34 is more likely to be guided to the one side in the vehicle width direction.

In the present embodiment, the case has been described in which the vehicle 10 is a pickup truck. Of course, the present invention is applicable to the vehicle 10 other than the pickup truck.

Although various embodiments have been described above with reference to the drawings, the present invention is not limited to these examples. It is apparent to those skilled in the art that variations or modifications may be conceived within the scope described in the claims, and it is understood that the variations or modifications naturally fall within the technical scope of the present invention. In addition, the components according to the embodiment described above may be freely combined without departing from the spirit of the present invention.

The present application is based on a Japanese patent application (Japanese Patent Application No. 2022-053159) filed on March 29, 2022, and the contents thereof are incorporated herein by reference.

### REFERENCE SIGNS LIST

10: vehicle
12: motor
14: speed reduction mechanism
16: high-voltage component
17: power plant
18: ladder frame
20: side frame
22: first cross member
24: second cross member
26: third cross member
28: front mount
32: rear mount (mount)
34: spare tire
36: protector
3602: vertical wall
3604: side wall
3606: bead
3608: flange
38: reinforcing member
3802: upper flange portion
3804: lower flange portion
3806: upper surface portion
3808: lower surface portion
3810: top surface portion
40: reinforcing member
4002: bottom surface portion
4004: side surface portion
4006: bead
L 1: virtual line
C1: center of spare tire 34
C2: center of high-voltage component 16 in vehicle width direction

## Claims

1. A bottom structure of a vehicle, the bottom structure comprising:
a frame above which a cabin is provided;
a power plant located below the frame and including a high-voltage component;
a mount located behind the high-voltage component and supporting the power plant on the frame; and
a spare tire located below the frame and supported on the frame behind the mount, wherein
when viewed from a front-rear direction of the vehicle, the high-voltage component and the mount overlap with each other, and the spare tire and the mount overlap with each other.

2. The bottom structure of the vehicle according to claim 1, wherein
a center of the spare tire is deviated from a virtual line of the vehicle to one side in a vehicle width direction, the virtual line passing through the mount and extending in the front-rear direction of the vehicle.

3. The bottom structure of the vehicle according to claim 2, wherein
a center of the high-voltage component in the vehicle width direction is deviated from the virtual line to the other side in the vehicle width direction.

4. The bottom structure of the vehicle according to any one of claims 1 to 3, wherein
the frame is provided with a protector that extends downward from the frame at a location between the mount and the spare tire.

5. The bottom structure of the vehicle according to claim 4, wherein
the protector is formed such that one side in a vehicle width direction is more deformable than the other side in the vehicle width direction.

6. The bottom structure of the vehicle according to claim 4 or 5, wherein
the protector is provided with a reinforcing member.

7. The bottom structure of the vehicle according to claim 6, wherein
the protector includes a vertical wall that extends in a vehicle width direction and a pair of side walls that protrude from both sides of the vertical wall in the vehicle width direction to forward of the vehicle, and
the reinforcing member extends in the vehicle width direction, and both ends of the reinforcing member in the vehicle width direction are connected to the pair of side walls.

8. The bottom structure of the vehicle according to claim 6 or 7, wherein
the reinforcing member is a bulkhead including an upper surface portion and a lower surface portion that extend in the front-rear direction of the vehicle, and a top surface portion that extends in an upper-lower direction of the vehicle to connect front end portions of the upper surface portion and the lower surface portion, and
the top surface portion faces the mount.
